# EUROPEAN PATENT APPLICATION

(11) **EP 4 397 893 A1**
(43) Date of publication of application: **10.07.2024**
(21) Application number: 22863421.8
(22) Date of filing: 30.08.2022
(51) Int. Cl.: F16K 5/06, F16K 5/08, F16K 27/06, F16K 31/04

(54) **FLUID CONTROL ASSEMBLY AND FLUID CONTROL APPARATUS**

(30) Priority: 30.08.2021 CN 202111005737
(71) Applicant: Zhejiang Sanhua Automotive Components Co., Ltd., Hangzhou, Zhejiang 310018 (CN)
(72) Inventor: WANG, Lixin, Hangzhou Economic & Technological Development Area Hangzhou, Zhejiang 310018 (CN); CHI, Jianhua, Hangzhou Economic & Technological Development Area Hangzhou, Zhejiang 310018 (CN); WANG, Yun, Hangzhou Economic & Technological Development Area Hangzhou, Zhejiang 310018 (CN); LIN, Long, Hangzhou Economic & Technological Development Area Hangzhou, Zhejiang 310018 (CN); ZHU, Haijun, Hangzhou Economic & Technological Development Area Hangzhou, Zhejiang 310018 (CN)
(74) Representative: Epping - Hermann - Fischer
(86) International application number: PCT/CN2022/115676
(87) International publication number: WO 2023/030286

(57) **Abstract**

Disclosed are a fluid control assembly and a fluid control apparatus. The fluid control assembly comprises a connector (10), a valve core (20), and a communication port (102). The communication port at least comprises a first port (P1), a second port (P2), a third port (P3), a fourth port (P4), and a fifth port (P5). The fluid control assembly has at least one of the following four working modes: in a first working mode, the valve core is located at a first position, and the valve core communicates the first port with the fifth port and communicates the second port with the third port; in a second working mode, the valve core is located at a second position, and the valve core communicates the first port with the fourth port and communicates the second port with the third port; in a third working mode, the valve core is located at a third position, and the valve core communicates the first port with the second port and communicates the third port with the fifth port; and in a fourth working mode, the valve core is located at a fourth position, the first port is communicated with the second port, and the third port is communicated with the fourth port. In this way, fluid control of multiple flow paths can be implemented.

## Description

This application claims priority to Chinese Patent Application No. 202111005737.9, titled "FLUID CONTROL ASSEMBLY AND FLUID CONTROL APPARATUS", filed on August 30, 2021 with the China National Intellectual Property Administration, which is incorporated herein by reference in its entirety.

### FIELD

The present application relates to the fluid control technology and in particular to a fluid control assembly and fluid control apparatus.

### BACKGROUND

Generally, a fluid control assembly is required in a thermal management system to control fluid in multiple flow paths. For example, in a motor vehicle, multiple fluid control assemblies can be configured to control fluid currently. Providing a fluid control assembly to control fluid in multiple flow paths can facilitate a more compact thermal management system.

### SUMMARY

The purpose of the present application is to provide a fluid control assembly and a fluid control apparatus that can realize fluid control of multiple flow paths and make a thermal management system more compact.

On the one hand, an embodiment of the present application provides a fluid control assembly with an accommodation chamber and a communication port. The fluid control assembly comprises a connecting member and a valve core. The connecting member comprises a side wall portion, which forms at least part of a peripheral wall of the accommodation chamber, the communication port is located in the side wall portion, at least part of the valve core is located in the accommodation chamber and is rotable under a driving force, the communication port comprises a first port, a second port, a third port, a fourth port and a fifth port. An orthographic projection of the first port, an orthographic projection of the second port, an orthographic projection of the third port, an orthographic projection of the fourth port and an orthographic projection of the fifth port in an axial direction of the side wall portion are arranged at intervals along a circumferential direction of the valve core, wherein the fluid control assembly has at least one of following four modes:
in a first operating mode, the valve core is located at a first position, where the valve core communicates the first port with the fifth port, and communicates the second port with the third port, in a second operating mode, the valve core is located at a second position, where the valve core communicates the first port with the fourth port, and communicates the second port with the third port, in a third operating mode, the valve core is located at a third position, where the valve core communicates the first port with the second port, and communicates the third port with the fifth port, in a fourth operating mode, the valve core is located at a fourth position, where the first port is connected to the second port, and the third port is connected to the fourth port.

On the other hand, an embodiment of the present application further provides a fluid control apparatus comprising a fluid management assembly and at least one fluid control assembly according to any one of the above embodiment. The fluid control assembly comprises a flow passage connected and a mounting joint, a part of the fluid management assembly is fitted to the mounting joint, and a port of the fluid management assembly is in communication with the flow passage.

According to the fluid control assembly and the fluid control apparatus provided by the embodiments of the present application, the fluid control assembly comprises a connecting member and a valve core, the fluid control assembly has a communication port, which comprises a first port, a second port, a third port, a fourth port, and a fifth port. By rotating the valve core, the valve core can be positioned in various positions, so that the fluid control assembly has at least one of four modes. With these four modes, different communication modes between multiple communication ports can be obtained, and thus multiple flow paths can be controlled by one fluid control assembly, which will be more compact when applying a thermal management system.

### BRIEF DESCRIPTION OF THE DRAWINGS

Figure 1 is an exploded structural view of a fluid control assembly according to an embodiment of the present application;
Figure 2 is a schematic three-dimensional structural view of the fluid control assembly shown in Figure 1;
Figure 3 is a schematic three-dimensional structural view of a connecting member according to an embodiment of the present application;
Figure 4 is a partial front structural schematic view of the fluid control assembly shown in Figure 2;
Figure 5 is a schematic cross-sectional structural view along a A-A direction shown in Figure 4;
Figure 6 is a schematic cross-sectional structural view of the connecting member shown in Figure 3 at one position;
Figure 7 is a schematic cross-sectional structural view along a B-B direction in Figure 4;
Figure 8 is a schematic cross-sectional structural view of the connecting member shown in Figure 3 at another position;
Figure 9 is a schematic structural view of a first seal according to an embodiment of the present application;
Figure 10 is a schematic front structural view of the first seal shown in Figure 9;
Figure 11 is a schematic structural view along a C-C direction in Figure 10;
Figure 12 is a schematic structural view along a D-D direction in Figure 10;
Figure 13 is an orthographic view of each pore passage of the first seal in Figure 10 along an axial direction of the first seal;
Figure 14 is a schematic three-dimensional structural view of a valve core according to an embodiment of the present application;
Figure 15 is a schematic front structural view of the valve core shown in Figure 13;
Figure 16 is a schematic structural view along a E-E direction in Figure 15;
Figure 17 is a schematic structural view along a F-F direction in Figure 15;
Figure 18 is a schematic cross-sectional structural view of the valve core shown in Figure 14 at one of its positions;
Figure 19 is a schematic structural view of the communication mode of each communication port when the fluid control assembly shown in Figure 2 is in the first operating position;
Figure 20 is a schematic structural view of the communication mode of each communication port when the fluid control assembly shown in Figure 2 is in the second operating position;
Figure 21 is a schematic structural view of the communication mode of each communication port when the fluid control assembly shown in Figure 2 is in the third operating position;
Figure 22 is a schematic structural view of the communication mode of each communication port when the fluid control assembly shown in Figure 2 is in the fourth operating position;
Figure 23 is an exploded structural schematic view of a fluid control assembly according to another embodiment of the present application;
Figure 24 is a schematic three-dimensional structural view of the fluid control assembly shown in Figure 23;
Figure 25 is a partial cross-sectional structural schematic view of the fluid control assembly shown in Figure 24;
Figure 26 is a schematic structural view of a connecting member according to another embodiment of the present application;
Figure 27 is a schematic cross-sectional structural view of the connecting member shown in Figure 26;
Figure 28 is a schematic three-dimensional structural view of a second seal according to an embodiment of the present application;
Figure 29 is a schematic cross-sectional structural view of the second seal shown in Figure 28;
Figure 30 is a schematic structural view of a valve core according to another embodiment of the present application;
Figure 31 is a schematic cross-sectional structural view of the valve core shown in Figure 30;
Figure 32 is a schematic structural view of the communication mode of each communication port when the fluid control assembly shown in Figure 24 is in the first operating position;
Figure 33 is a schematic structural view of the communication mode of each communication port when the fluid control assembly shown in Figure 24 is in the second operating position;
Figure 34 is a schematic structural view of the communication mode of each communication port when the fluid control assembly shown in Figure 24 is in the third operating position;
Figure 35 is a schematic structural view of the communication mode of each communication port when the fluid control assembly shown in Figure 24 is in the fourth operating position;
Figure 36 is a schematic structural view of a fluid control apparatus according to an embodiment of the present application;
Figure 37 is a schematic structural view of a fluid control apparatus according to another embodiment of the present application.

### DETAILED DESCRIPTION OF EMBODIMENTS

Features and exemplary embodiments of various aspects of the present application will be described in detail below. In order to make the purpose, technical solutions and advantages of the present application clearer, the present application will be further described below in conjunction with the accompanying drawings and specific embodiments. In the present application, relational terms such as "first" and "second" are merely configured to distinguish one component from another component having the same name and do not necessarily require or imply any such component or order between these components.

An embodiment of the present application provide a fluid control assembly that can be used in a vehicle thermal management system, specifically in a coolant circulation system, and can perform flow path conduction and switching functions for a thermal management system.

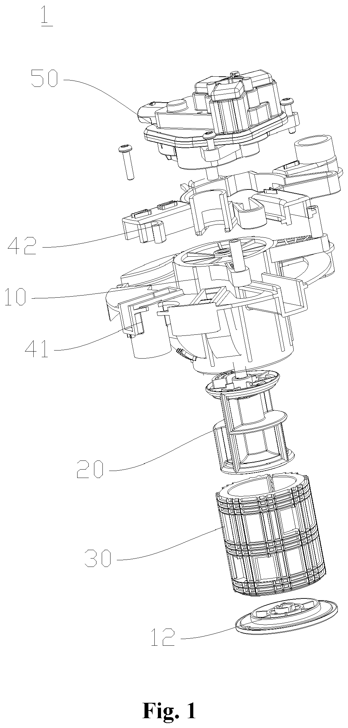

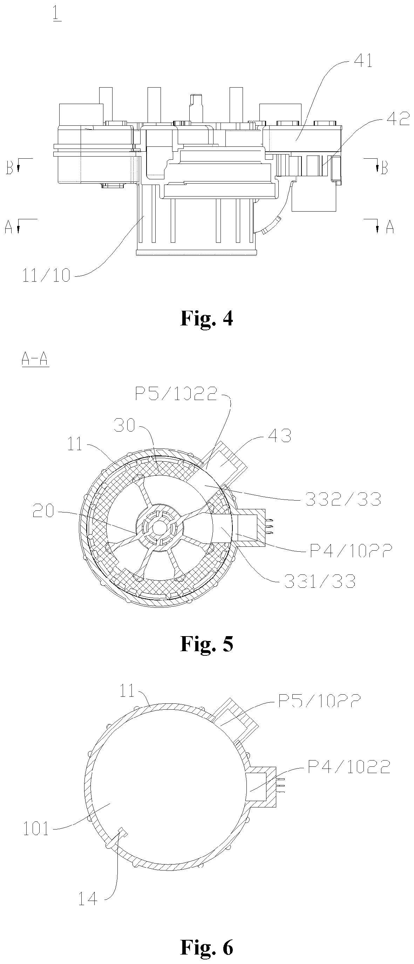

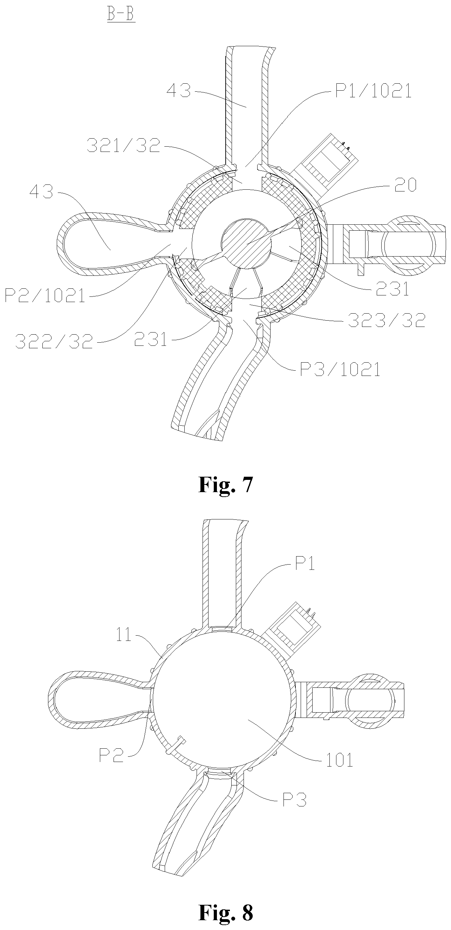

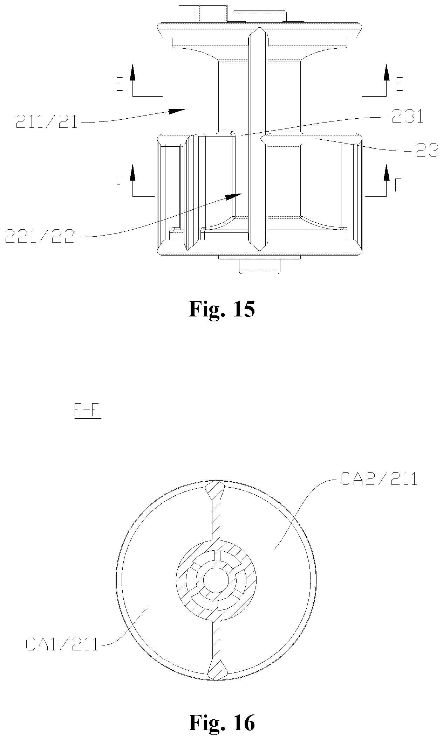

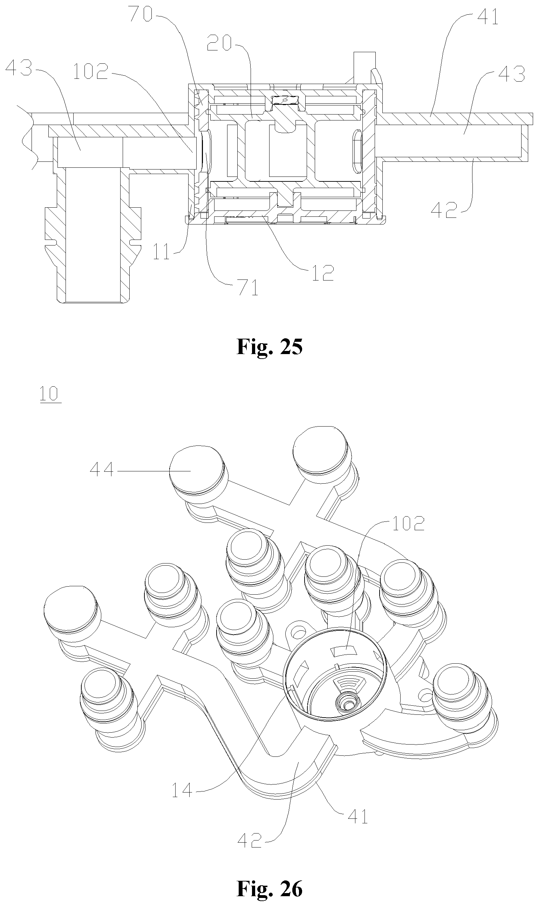

As shown in FIG. 1 to 35, a fluid control assembly 1 comprises a connecting member 10 and a valve core 20. The fluid control assembly 1 has an accommodation chamber 101 and a communication port 102. The communication port 102 is arranged adjacent to the accommodation chamber 101 and is in communication with the accommodation chamber 101. The connecting member 10 comprises a side wall portion 11, which forms at least part of a peripheral wall of the accommodation chamber 101. The communication port 102 is located in the side wall portion 11. The connecting member 10 can further comprise a top wall portion and a bottom cover 12. The side wall portion 11, the top wall portion and the bottom cover 12 define the accommodation chamber 101, and at least part of the side wall portion 11 is located between the top wall portion and the bottom cover 12. One of the top wall portion and the bottom cover 12 can be integrally injection molded with the side wall portion 11 to form an integrated structure. The other one of the top wall portion and the bottom cover 12 is sealedly connected with the side wall portion 11. At least part of the valve core 20 is located in the accommodation chamber 101 and the valve core 20 can be driven to rotate. Optionally, the fluid control assembly 1 further comprises a driving assembly 50. The driving assembly 50 comprises a driving member, which may comprise a motor or a combination of a motor and a transmission gear set. The driving member is transmission connected to the valve core 20, so that the driving member drives the valve core 20 to rotate.

Further referring to FIG. 1 to 8 and FIG.23 to 26, in some embodiments, the fluid control assembly 1 comprises a flow passage 43. The flow passage 43 is in communication with the corresponding communication port 102. The fluid control assembly 1 further comprises a first flow passage plate 41. The first flow passage plate 41 forms a part of a wall portion of the flow passage 43. The first flow passage plate 41 extends from an outer surface of the side wall portion 11 in a direction away from the accommodation chamber 101. The first flow passage plate 41 and the connecting member 10 can be formed into an integrated structure by integrally injection molding. With the above arrangement, a better sealing performance between the first flow passage plate 41 and the connecting member 10 can be achieved, which facilitates of reducing the number of parts of the fluid control assembly 1 and improving the assembly efficiency of the fluid control assembly 1.

Furthermore, the fluid control assembly 1 can further comprise a second flow passage plate 42, which is sealed with the first flow passage plate 41 and forms a wall portion of the flow passage 43. In that case, the first flow passage plate 41 and the second flow passage plate 42 are enclosed to form the flow passage 43. Optionally, the second flow passage plate 42 can be welded to the first flow passage plate 41. The fluid control assembly 1 further comprises a mounting joint 44 in communication with the flow passage 43. The mounting joint 44 is located on one of the first flow passage plate 41 and the second flow passage plate 42 and can be in communication with a port of the fluid management assembly. The fluid management assembly can be, but is not limited to, any one of a heat exchanger, a water pump, and a liquid reservoir or combination thereof. With the above arrangement, the fluid management assembly can be easily in communication with the fluid control assembly 1 and can reduce piping between fluid management assembly and the fluid control assembly 1.

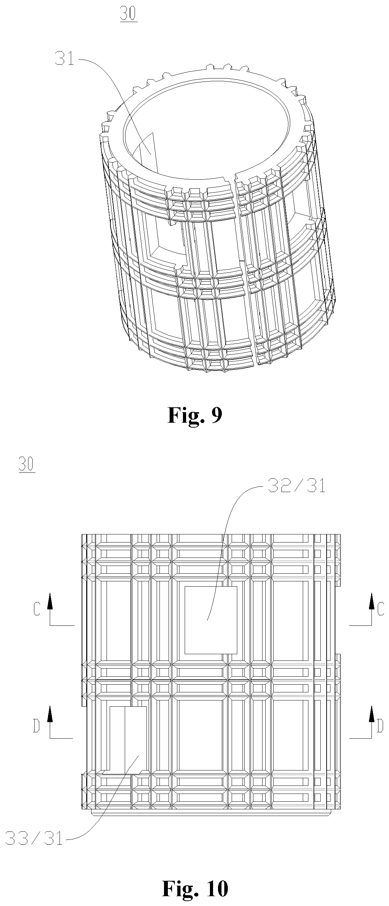

Further referring to FIG. 1 to 22, a fluid control assembly 1 is provided in an embodiment of the present application. In this embodiment, the fluid control assembly 1 further comprises a first seal 30, and, in a radial direction of the accommodation chamber 101, at least part of the first seal 30 is located between the side wall portion 11 and the valve core 20 to achieve sealing of the fluid control assembly 1. The first seal 30 comprises pore passages 31 in communication with the communication ports 102. Optionally, the number of pore passages 31 of the first seal 30 is the same with that of the communication ports 102, and the pore passages 31 are arranged to correspond to the communication ports 102 one by one. As shown in FIG.9 to 12, in an axial direction of the first seal 30, orthographic projections of all the pore passages 31 of the first seal 30 are arranged at intervals along a circumferential direction of the valve core 20. The pore passage 31 comprises a first pore passage 32 and a second pore passage 33, which are arranged at intervals in the axial direction of the first seal 30. Specifically, as shown in FIG.10, the first pore passages 32 are located at one level of the first seal 30, and the second pore passages 33 are located at another level of the seal 30. In the axial direction of the first seal 30, orthographic projections of the first pore passages 32 and orthographic projections of the second pore passages 33 are spaced apart along the circumferential direction of the valve core 20. In that case, the first pore passages 32 and the second pore passages 33 arranged at intervals along the circumferential direction of the valve core 20 are respectively located at different levels of the first seal 30. Compared with the case that all pore passages are arranged at intervals along the circumferential direction of the valve core and arranged at the same level of the seal, it is easy for the first seal 30 of the flow control apparatus provided by the embodiment of the present application to increase a length of the wall portion between two pore passages 31 at the same level, so as to facilitate of tightly pressing the wall portion of the first seal 30 by the valve core 20 during the rotation thereof and improving the sealing performance of the fluid control assembly.

In order to prevent the first seal 30 from rotating, the first seal 30 comprises a first fitting portion 34, and the connecting member comprises a limiting part 14. The first fitting portion 34 is limitedly connected to the limiting part 14, for example, the first fitting portion 34 can be embodied as one of a hole structure and a protrusion structure. The limiting part 14 can be embodied as the other one of the hole structure and the protrusion structure. The protrusion structure is embedded into the hole structure for position limiting.

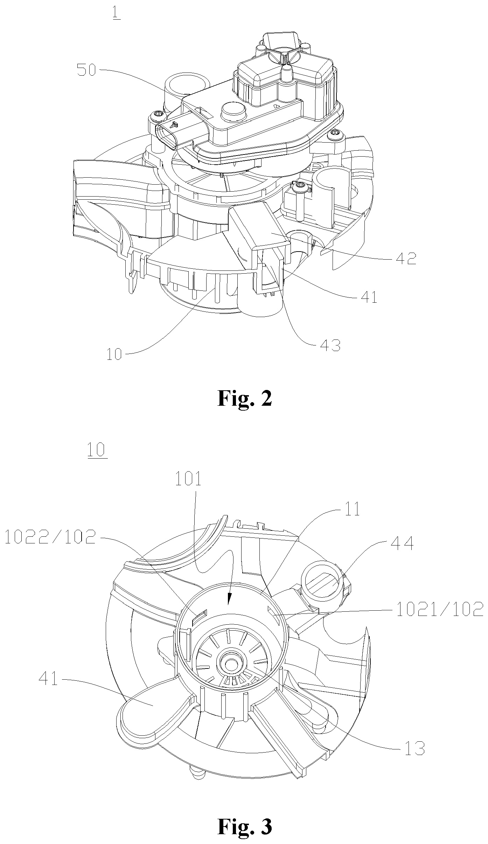

In order to achieve a corresponding communication between the communication port 102 and the pore passage 31, in some embodiments as shown in FIG.3 to 8, in the axial direction of the side wall portion 11, the orthographic projections of the communication ports 102 are arranged at intervals along the circumferential direction of the valve core 20. The communication port 102 comprises a first communication port 1021 and a second communication port 1022, which are arranged at intervals along the axial direction of the side wall portion 11. The first communication port 1021 is in communication with the first pore passage 32, and the second communication port 1022 is in communication with the second pore passage 33. Optionally, the communication port 102 can comprise three first communication ports 1021 and two second communication ports 1022. The three first communication ports 1021 can be located at the same level of the fluid control assembly 1, and the two second communication ports 1022 can be located at the same level of the fluid control assembly 1. Along the axial direction of the side wall portion 11, orthographic projections of three first communication ports 1021 are adjacent with each other, and orthographic projections of two second communication ports 1022 are adjacent with each other. Herein, the orthographic projection of each communication port in the axial direction of the valve core 20 comprises an area enclosed and defined by the orthographic projection of the wall portion of each communication port along the axial direction of the valve core 20, and the axial direction of the side wall portion 11, the axial direction of the valve core 20 and the axial direction of the first seal 30 are parallel or coincident.

As shown in FIG.9 to 12, the pore passage 31 of the first seal 30 comprises at least one first pore passage 32 and at least two second pore passages 33. In the axial direction of the first seal 30, the orthographic projections of all the first pore passages 32 are adjacent with each other, and the orthographic projections of all the second pore passages 33 are adjacent with each other. In a specific embodiment, the pore passage 31 of the first seal 30 comprises three first pore passages 32 and two second pore passages 33. The three first pore passages 32 can be located at the same level of the first seal 30, and the two second pore passages 33 can be located at the same level of the first seal 30. In the axial direction of the first seal 30, the orthographic projections of the three first pore passages 32 are adjacent with each other, and the orthographic projections of the two second pore passages 33 are adjacent with each other. In this embodiment, an interval angle between two adjacent first pore passages 32 can be 90 degrees, and an interval angle between two adjacent second pore passages 33 can be 45 degrees.

Further referring to FIG.9 to 12, the three first pore passages 32 are defined as a first sub-pore passage 321, a second sub-pore passage 322 and a third sub-pore passage 323, respectively, and the two second pore passages 33 are defined as a fourth sub-pore passage 331 and a fifth sub-pore passage 332, respectively. The first seal 30 comprises a first circumferential wall portion 35 and a second circumferential wall portion 36. In the axial direction of the first seal 30, the orthographic projection of the first circumferential wall portion 35 and the orthographic projection of the second circumferential wall portion 36 are arranged along the circumferential direction of the valve core 20. The first circumferential wall portion 35 is located between the first sub-pore passage 321 and the third sub-pore passage 323. The first circumferential wall portion 35 and the second sub-pore passage 322 are respectively provided on two sides of the first seal 30 in the radial direction, where a central angle a1 corresponding to the first circumferential wall portion 35 is greater than 90 degrees and less than 180 degrees. The second circumferential wall portion 36 is located between the fourth sub-pore passage 331 and the fifth sub-pore passage 332, where a central angle a2 corresponding to the second circumferential wall portion 36 is greater than 180 degrees. In that case, at the level where the first pore passage 32 of the first seal 30 is located, almost half of the wall portion is not provided with pore passages, and at the level where the second pore passage 33 of the first seal 30 is located, almost more than half of the wall portion is not provided with pore passages. Compared with the case of arranging all the pore passages circumferentially at the same level of the seal, the fluid control assembly according to the embodiment of the present application can increase a length of the wall portion between two pore passages 31 located at the same level, so as to improve the sealing performance of the fluid control assembly.

During rotation of the valve core 20, due to factors such as the control accuracy of the driving assembly 50 or the signal transmission delay or the rotational inertia of the valve core 20, it is possible that the valve core 20 is stopped before rotating to a set angle or continues to rotate after arriving at the set angle, which easily causes the valve core 20 to generate a rotation tolerance. For example, the tolerance of rotation angle of the valve core 20 can be ±5 degrees, that is, the valve core 20 can rotate and stop when reaching to a positon before the set angle by 5 degrees or continue to rotate until it stops at a position past the set angle by 5 degrees. Therefore, in this embodiment, in order to enable the first seal 30 to be always contact with the valve core 20 in each stroke of the rotation of the valve core 20 and provide the first seal 30 with better sealing performance, the first pore passages 32 and the second pore passages 33 are configured to be spaced apart in the axial direction of the first seal 30, and thus a length of the wall portion between the two pore passages 31 located at the same level can be increased, which facilitates the valve core 20 of being always in contact with the wall portion of the first seal 30 within the stroke range, so as to improve the sealing performance of the first seal 30.

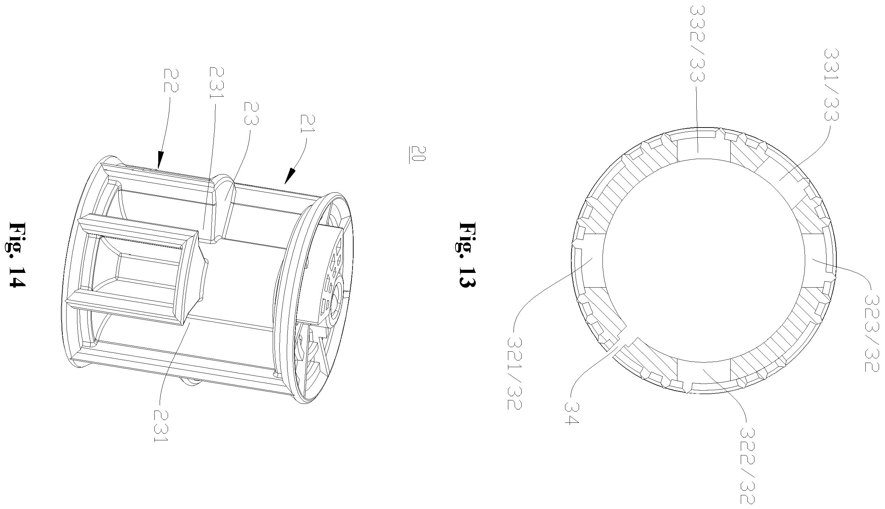

As shown in FIG. 14 to 18, in some embodiments, the valve core 20 comprises a first set of chambers 21, a partition plate 23 and a second set of chambers 22. In the axial direction of the valve core 20, the partition plate 23 is located between the first set of chambers 21 and the second set of chambers 22. The first set of chambers 21 comprises at least two mutually partitioned first conductive chambers 211, and the second set of chambers 22 comprises at least two mutually partitioned second conductive chambers 221. The partition plate 23 comprises a through hole 231, and a number of the first conductive chambers 211 are correspondingly in communication with a number of the second conductive chambers 221 through the through hole 231. The communication port 102 corresponding to the first pore passage 32 is able to be in communication with the communication port 102 corresponding to the second pore passage 33 through the first conductive chamber 211, the through hole 231 and the second conductive chamber 221 by rotation of the valve core 20. With the above configuration, a fluid control function of the fluid control assembly can be implemented.

As shown in FIG.3 to 22, the communication port 102 of the fluid control assembly comprises a first port P1, a second port P2, a third port P3, a fourth port P4 and a fifth port P5. An orthographic projection of the first port P1, an orthographic projection of the second port P2, an orthographic projection of the third port P3, an orthographic projection of the fourth port P4 and an orthographic projection of the fifth port P5 are spaced apart and arranged sequentially along the circumferential direction of the valve core 20. As shown in the figures, the case that the orthographic projections of said five ports are arranged counterclockwise along the circumferential direction of the valve core 20 is taken as an example for description. Optionally, the orthographic projection of the first port P1, the orthographic projection of the second port P2, the orthographic projection of the third port P3, the orthographic projection of the fourth port P4 and the orthographic projection of the fifth port P5 are arranged clockwise along the circumferential direction of the valve core 20. In the axial direction of the side wall portion 11, the first port P1, the second port P2 and the third port P3 are located at one level of the fluid control assembly 1, and the fourth port P4 and the fifth port P5 are located at another level of the fluid control assembly 1, where the first port P1 is in communication with the first sub-pore passage 321, the second port P2 is in communication with the second sub-pore passage 322, the third port is in communication with the third sub-pore passage 323. One of the first port P1 and the third port P3 can be in communication with the second port P2 through the first conductive chamber 211, and one of the fourth port P4 and the fifth port P5 can be in communication with the first port P1 through the first conductive chamber 211, the through hole 231, the second conductive chamber 221, the corresponding first pore passage 32 and the corresponding second pore passage 33. One of the fourth port P4 and the fifth port P5 can be in communication with the third port P3 through the first conductive chamber 211, the through hole 231, the second conductive chamber 221, the corresponding first pore passage 32 and the corresponding second pore passage 33. With the above configuration, various flow modes of the fluid control assembly can be obtained. In specific implementation, the number of communication ports 102 of the fluid control assembly can be three, four, five, six or more, which is not limited in the present application.

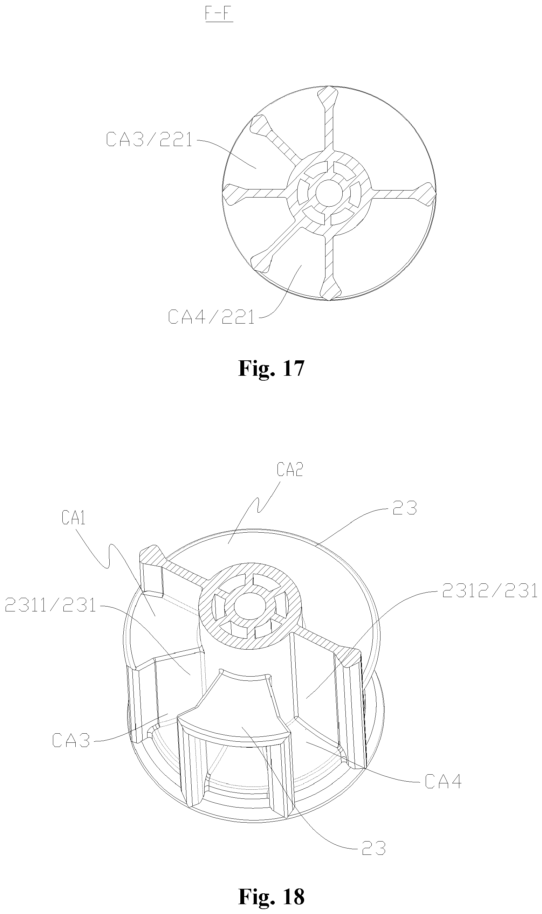

Referring to FIG.14 to 22, in some embodiments, the first conductive chamber 211 of the valve core 20 comprises a first chamber CA1 and a second chamber CA2 that are partitioned with each other, and the second conductive chamber 221 comprises a third chamber CA3 and a fourth chamber CA4 that are partitioned with each other. In the axial direction of the valve core 20, the orthographic projection of the third chamber CA3 and the orthographic projection of the fourth chamber CA4 are both located within the orthographic projection of the first chamber CA1, and the through hole 231 of the partition plate 23 comprises a first through hole 2311 and a second through hole 2312. The third chamber CA3 is in communication with the first chamber CA1 through the first through hole 2311, and the fourth chamber CA4 is in communication with the first chamber CA1 through the second through hole 2312. As shown in FIG.18 to 21, one of the first port P1 and the third port P3 can be in communication with the second port P2 through the second chamber CA2. One of the first port P1 and the third port P3 can be in communication with one of the fourth port P4 and the fifth port P5 through the first chamber CA1, the first through hole 2311, the third chamber CA3, the second through hole 2312 and the fourth chamber CA4.

Furthermore, as shown in FIG.9 to 13 and FIG.19 to 22, the communication relationships between communication ports are schematically illustrated by black and bold curve lines in the figures. In some embodiments, the fluid control assembly has at least one of following four operating modes, and the various operating modes can be switched by rotating the valve core 20.

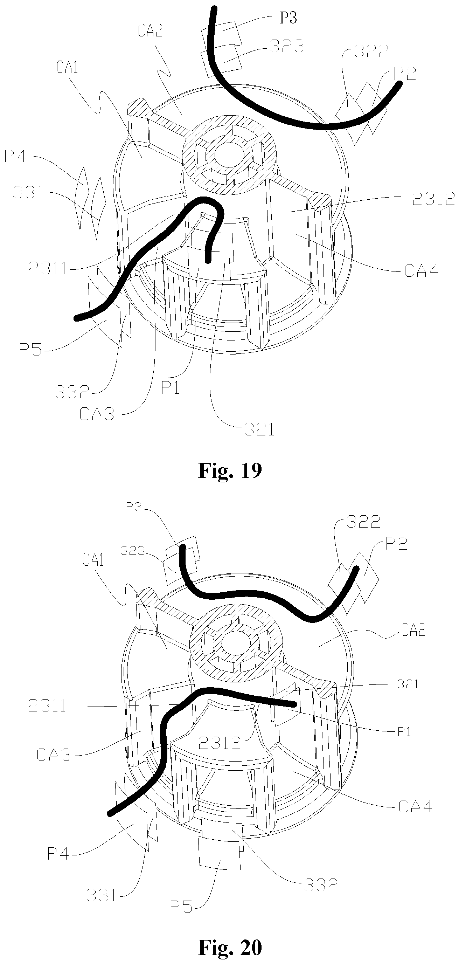

As shown in FIG.19, the fluid control assembly is in a first operating mode. In that case, the valve core 20 is located at a first position, where the valve core 20 communicates the first port P1 with the fifth port P5, and communicates the second port P2 with the third port P3. Specifically, the first port P1 and the fifth port P5 are in communication through the first sub-pore passage 321, the first chamber CA1, the first through hole 2311, the third chamber CA3 and the fifth sub-pore passage 332, and the fourth port P4 is in a closed state. The second port P2 and the third port P3 are in communication through the second sub-pore passage 322, the second chamber CA2 and the third sub-pore passage 323. Herein, the position where the valve core 20 is located refers to the position of the valve core 20 relative to the connecting member 10.

As shown in FIG.20, the fluid control assembly is in a second operating mode. In that case, the valve core 20 is located at a second position, where the valve core 20 communicates the first port P1 with the fourth port P4, and communicates the second port P2 with the third port P3. Specifically, the first port P1 and the fourth port P4 are in communication through the first sub-pore passage 321, the first chamber CA1, the first through hole 2311, the third chamber CA3 and the fourth sub-pore passage 331. The port P5 is in a closed state, and the second port P2 and the third port P3 are in communication through the second sub-pore passage 322, the second chamber CA2 and the third sub-pore passage 323.

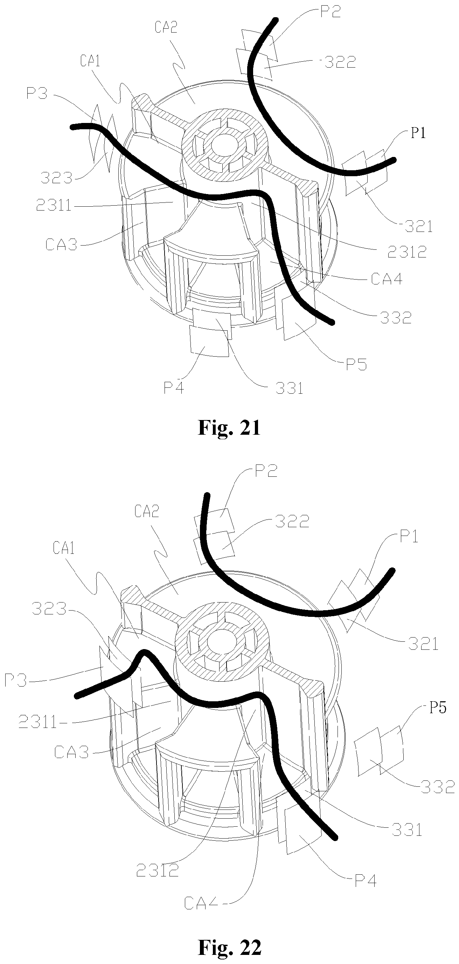

As shown in FIG.21, the fluid control assembly is in a third operating mode. In that case, the valve core 20 is located at a third position, where the valve core 20 communicates the third port P3 with the fifth port P5, and communicates the first port P1 with the second port P2. Specifically, the third port P3 and the fifth port P5 are in communication through the third sub-pore passage 323, the first chamber CA1, the second through hole 2312, the fourth chamber CA4 and the fifth sub-pore passage 332. The fourth port P4 is in a closed state, and the first port P1 and the second port P2 are in communication through the first sub-pore passage 321, the second chamber CA2 and the second sub-pore passage 322.

As shown in FIG.22, the fluid control assembly is in a fourth operating mode. In that case, the valve core 20 is located at a fourth position, where the valve core 20 communicates the third port P3 with the fourth port P4, and communicates the first port P1 with the second port P2. Specifically, the third port P3 and the fourth port P4 are in communication through the third sub-pore passage 323, the first chamber CA1, the second through hole 2312, the fourth chamber CA4 and the fourth sub-pore passage 331. The port P5 is in a closed state, and the first port P1 and the second port P2 are in communication through the first sub-pore passage 321, the second chamber CA2 and the second sub-pore passage 322.

With the above configuration, the fluid control assembly can be provided with communication ports at two levels in the axial direction of the side wall portion 11, i.e., the first communication port and the second communication port. The first seal 30 is provided with pore passages at two levels, i.e., the first pore passage and the second pore passage. The valve core 20 is provided with conductive chambers at two levels so as to obtain various communication modes of the communication ports. It should be understood that the fluid control assembly can also be provided with communication ports at three levels in the axial direction of the side wall portion 11, the first seal 30 is provided with pore passages at three levels, and the valve core 20 is provided with conductive chambers at three levels in order to obtain various communication modes of the communication ports, which is not limited in the present application.

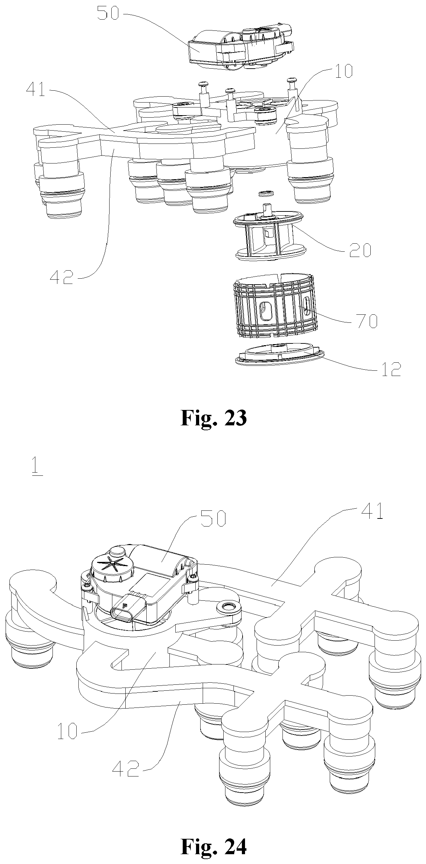

As shown in FIG.23 to 35, a fluid control assembly is provided according to another embodiment of the present application, which is different from the fluid control assembly of any one of the above embodiments in that: a first port P1, a second port P2, a third port P3, a fourth port P4 and a fifth port P5 are all located at the same level of the fluid control assembly 1. The valve core 20 comprises a fifth chamber CA5, a sixth chamber CA6 and a seventh chamber CA7 that are partitioned with each other. In the radial direction of the valve core 20, the sixth chamber CA6 is located between the fifth chamber CA5 and the seventh chamber CA7. Either the fifth chamber CA5 or the seventh chamber CA7 is able to communicate two adjacent communication ports 102 along the circumferential direction. The chamber CA6 can communicate the first port P1 with the fourth port P4, or the sixth chamber CA6 can communicate the third port P3 with the fifth port P5.

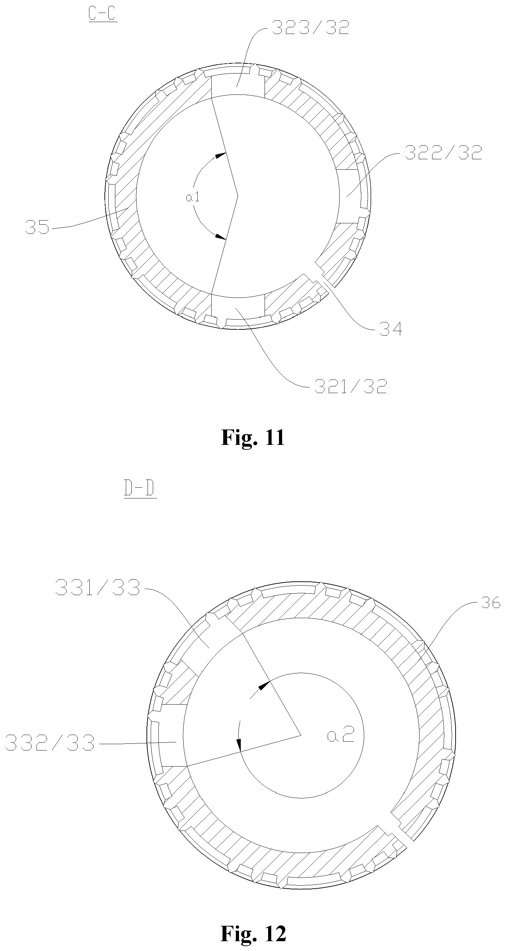

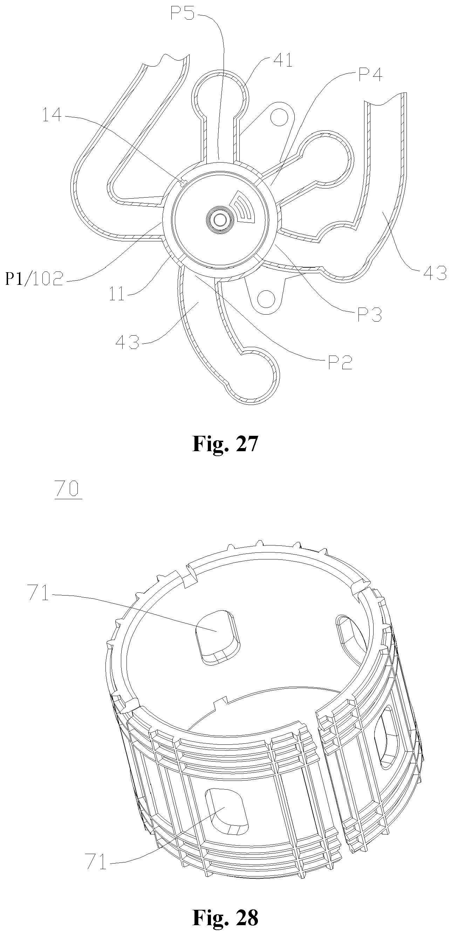

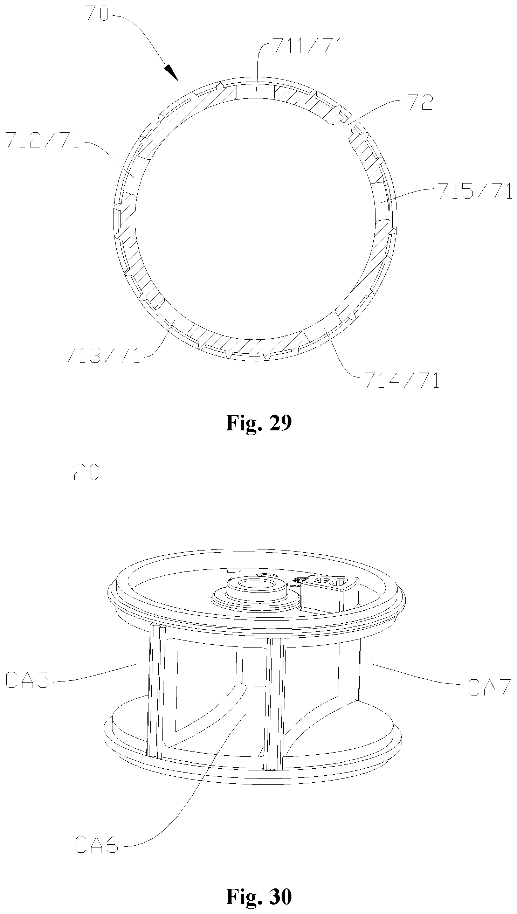

As shown in FIG.28 and 29, in some embodiments, the fluid control assembly 1 further comprises a second seal 70. The second seal 70 comprises passages 71, and the number of the passages 71 is the same with that of the communication ports 102 and the passages 71 are in communication with the corresponding communication ports 102. The passages 71 are evenly arranged along the circumferential direction of the valve core 20, and all of passages 71 are located at the same level of the second seal 70. In order to limit the rotation of the second seal 70, the second seal may comprise a second fitting portion 72, and the connecting member 10 comprises a limiting portion 14. The second fitting portion 72 matches with the limiting portion 14 so as to limit the position of the second seal 70. The structure of the second fitting part 72 may be similar to that of the first fitting portion 34 shown in FIG. 11, which will not be described again. In specific implementation, the passage 71 of the second seal 70 comprises a first sub-pore passage 711, a second sub-pore passage 712, a third sub-pore passage 713, a fourth sub-pore passage 714, and a fifth sub-pore passage 715. The first sub-pore passage 711 is in communication with the first port P1, the second sub-pore passage 712 is in communication with the second port P2, the third sub-pore passage 713 is in communication with the third port P3, the fourth sub-pore passage 714 is in communication with the fourth port P4, the fifth sub-pore passage 715 is in communication with the fifth port P5.

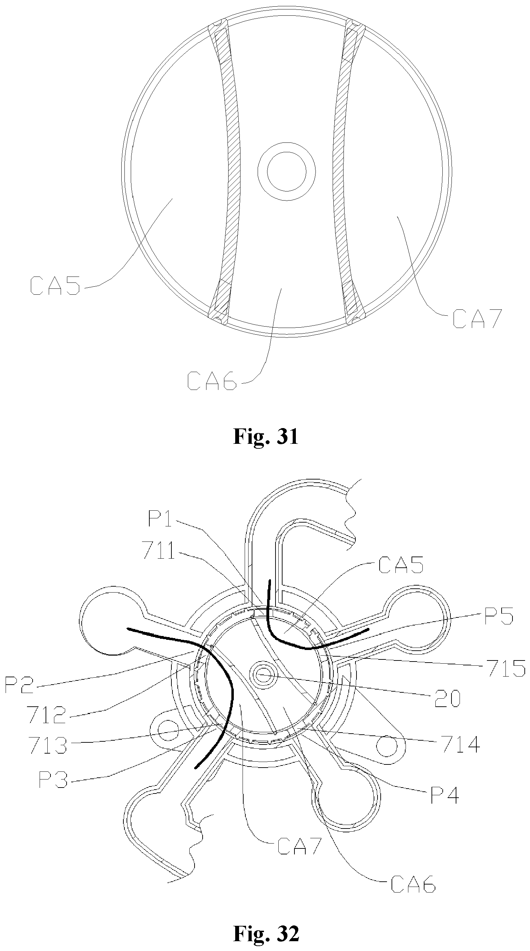

Based on above, as shown in FIG.32 to 35, the communication relationships between communication ports are schematically illustrated by black and bold curve lines in the figures. The fluid control assembly has at least one of the following four operating modes.

As shown in FIG.32, in the first operating mode, the valve core 20 is located at the first position, where the valve core 20 communicates the first port P1 with the fifth port P5, and communicates the second port P2 with the third port P3. Specifically, in the first operating mode, the first port P1 and the fifth port P5 are in communication through the fifth chamber CA5, the first sub-pore passage 711 and the fifth sub-pore passage 715, and the second port P2 and the third port P3 are in communication through the seventh chamber CA7, the second sub-pore passage 712 and the third sub-pore passage 713.

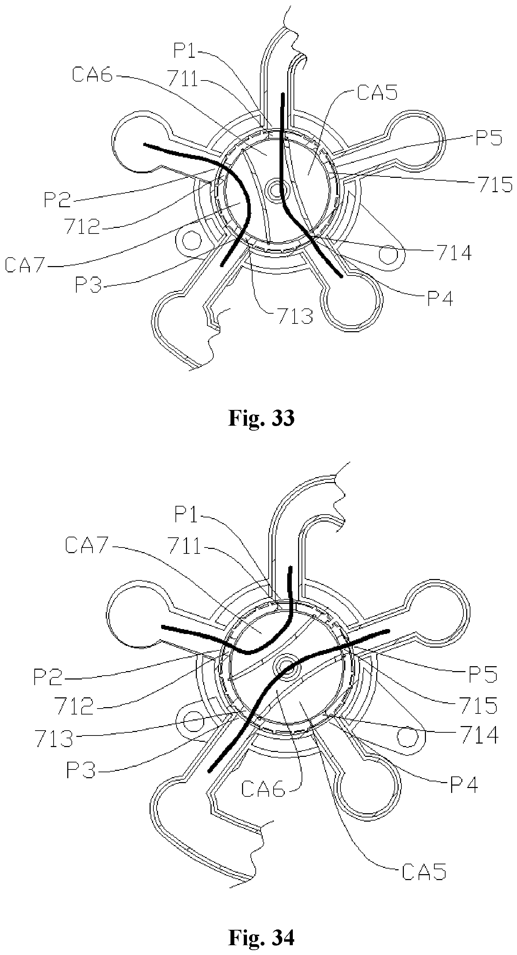

As shown in FIG.33, in the second operating mode, the valve core 20 is located at the second position, where the valve core 20 communicates the first port P1 with the fourth port P4, and communicates the second port P2 with the third port P3. Specifically, the first port P1 and the fourth port P4 are in communication through the sixth chamber CA6, the first sub-pore passage 711 and the fourth sub-pore passage 714, and the second port P2 and the third port P3 are in communication through the seventh chamber CA7, the second sub-pore passage 712 and the third sub-pore passage 713.

As shown in FIG.34, in the third operating mode, the valve core 20 is located at the third position, where the valve core 20 communicates the first port P1 with the second port P2, and communicates the third port P3 with the fifth port P5. Specifically, the first port P1 and the second port P2 are in communication through the seventh chamber CA7, the first sub-pore passage 711 and the second sub-pore passage 712, and the third port P3 and the fifth port P5 are in communication through the sixth chamber CA6, the third sub-pore passage 713 and the fifth sub-pore passage 715.

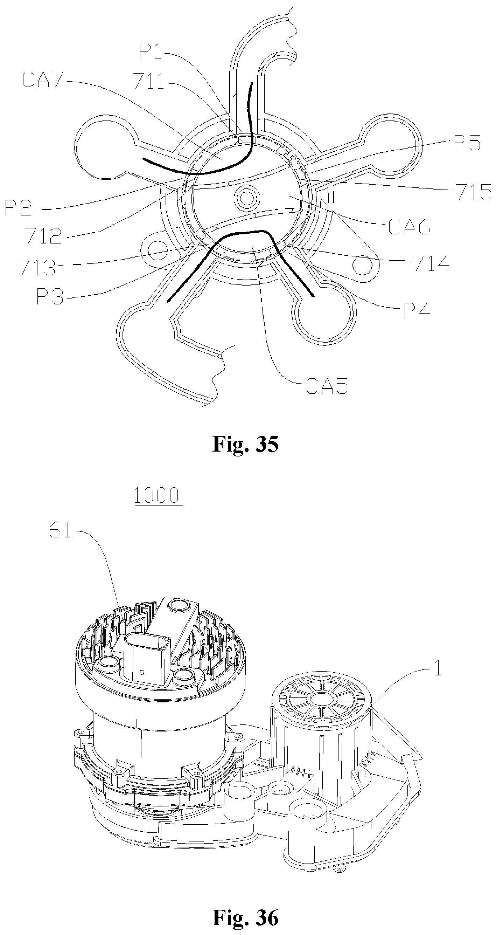

As shown in FIG.35, in the fourth operating mode, the valve core 20 is located at the fourth position, where the valve core 20 communicates the first port P1 with the second port P2, and communicates the third port P3 with the fourth port P4. Specifically, the first port P1 and the second port P2 are in communication through the seventh chamber CA7, the first sub-pore passage 711 and the second sub-pore passage 712, and the third port P3 and the fourth port P4 are in communication through the fifth chamber CA5, the third sub-pore passage 713 and the fifth sub-pore passage 715.

In summary, the fluid control assembly 1 according to embodiments of the present application comprises a connecting member 10 and a valve core 20. The fluid control assembly 1 has a communication port 102. The communication port 102 comprises a first port P1, a second port P2, a third port P3, a fourth port P4 and a fifth port P5. The valve core 20 can be located at multiple different positions by rotating the valve core 20, so that the fluid control assembly 1 has at least one of four modes. Among the four modes, various communication modes between multiple communication ports 102 can be obtained, so that one fluid control assembly 1 can control multiple flow paths, which will be more convenient and compact in use and facilitate promotion and application.

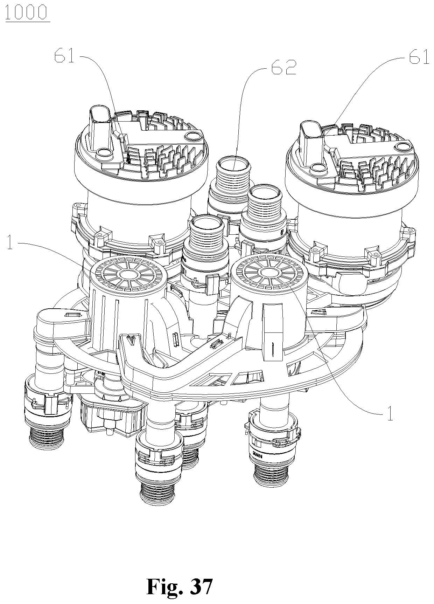

As shown in FIG.1 and 2, and FIG.36 and 37, a fluid control apparatus 1000 is further provided according to an embodiment of the present application. The fluid control apparatus 1000 comprises a fluid management assembly 61 and at least one fluid control assembly 1 according to any one of the above embodiments. The fluid control apparatus 1000 is provided with a flow passage 43, and the fluid management assembly 61 can comprise but is not limited to any one of a heat exchanger, an electric pump, and a liquid reservoir or the combination thereof. The fluid control assembly 1 comprises a first flow passage plate 41 and a second flow passage plate 42. The second flow passage plate 42 is sealed with the first flow passage plate 41, which form the wall portion of the flow passage 43. The first flow passage plate 41 can be integrally injection molded with the connecting member 10 to form an integrated structure. The second flow passage plate 42 can be welded to the first flow passage plate 41. The fluid control assembly further comprises a mounting joint 44 in communication with the flow passage. The mounting joint 44 is located in one of the first flow passage plate 41 and the second flow passage plate 41, and can be in communication with a port of the fluid management assembly 61.

Furthermore, the fluid control assembly 1 may further comprise a second flow passage plate 42. The second flow passage plate 42 is sealed with the first flow passage plate 41, which form the wall portion of the flow passage 43. In that case, the first flow passage plate 41 and the second flow passage plate 42 are enclosed to form the flow passage 43. Optionally, the second flow passage plate 42 can be welded to the first flow passage plate 41. The fluid control assembly 1 also has a mounting joint 44 in communication with the flow passage. The mounting joint 44 is located in at least one of the first flow passage plate 41 and the second flow passage plate 42. At least part of the fluid management assembly 61 is installed on the mounting joint 44, and the port of the fluid management assembly 61 and the passage in the fluid management assembly 61 are in communication with the flow passage 43. With the above configuration, the fluid management assembly can be easily in communication with the fluid control assembly 1, and the pipeline between the fluid management assembly and the fluid control assembly 1 can be reduced. The fluid control apparatus according to the embodiment of the present application has the same beneficial effects as the fluid control assembly 1 according to any one of the above embodiments, which will not be described again.

Optionally, the fluid control apparatus 1000 may further comprise structures such as an adapter pipe 62 and a temperature sensor. The adapter pipe 62 and the temperature sensor can be connected to at least one of the first flow passage plate 41 and the second flow passage plate 42 and sealed, so that the passages in the fluid management assembly 61 and the passages in the pipe 62 are in communication with the passages 43 in the fluid control assembly 1, which facilitates of reducing the pipeline connections between the fluid control assembly 1, the fluid management assembly 61 and adapter pipes 62, and can improve the integration level of the fluid control apparatus 1000.

It should be noted that the above embodiments are only configured to illustrate the present application and do not limit the technical solutions described in the present application. For example, the directional definitions of "front", "back", "left", "right", "upper" and "lower", and the like, although the present application has been described in detail in this specification with reference to the above-mentioned embodiments, those skilled in the art should understand that those skilled in the art can still modify, combine or equate the present application, and all technical solutions and improvements thereof that do not depart from the spirit and scope of the present application shall be covered by the claims of the present application.

## Claims

1. A fluid control assembly, having an accommodation chamber and a communication port, wherein the fluid control assembly comprises a connecting member and a valve core, and the connecting member comprises a side wall portion, which forms at least part of a peripheral wall of the accommodation chamber,
wherein the communication port is located in the side wall portion, at least part of the valve core is located in the accommodation chamber and is rotable, and the communication port comprises a first port, a second port, a third port, a fourth port and a fifth port,
wherein an orthographic projection of the first port, an orthographic projection of the second port, an orthographic projection of the third port, an orthographic projection of the fourth port and an orthographic projection of the fifth port in an axial direction of the side wall portion are arranged at intervals in a circumferential direction of the valve core,
wherein the fluid control assembly has at least one of following four operating modes:
a first operating mode, in which the valve core is located at a first position, wherein the valve core communicates the first port with the fifth port, and communicates the second port with the third port,
a second operating mode, in which the valve core is located at a second position, wherein the valve core communicates the first port with the fourth port, and communicates the second port with the third port,
a third operating mode, in which the valve core is located at a third position, wherein the valve core communicates the first port with the second port, and communicates the third port with the fifth port, and
a fourth operating mode, in which the valve core is located at a fourth position, wherein the valve core communicates the first port with the second port, and communicates the third port with the fourth port.

2. The fluid control assembly according to claim 1, further comprising a flow passage, wherein the flow passage is in communication with the communication port, and the fluid control assembly further comprises a first flow passage plate, which forms a part of a wall portion of the flow passage, wherein the first flow passage plate extends from an outer surface of the side wall portion in a direction away from the accommodation chamber, and the first flow passage plate is integrated with the connecting member by injection molding.

3. The fluid control assembly according to claim 2, further comprising a second flow passage plate, which forms the other part of the wall portion of the flow passage, and the second flow passage plate is sealed with the first flow passage plate, wherein the fluid control assembly further comprises a mounting joint in communication with the flow passage, and the mounting joint is located in at least one of the first flow passage plate and the second flow passage plate.

4. The fluid control assembly according to any one of claims 1 to 3, wherein the first port, the second port and the third port are located at one level of the fluid control assembly, and the fourth port and the fifth port are located at another level of the fluid control assembly,
wherein the valve core comprises a first set of chambers, a partition plate and a second set of chambers, the partition plate is located between the first set of chambers and the second set of chambers in an axial direction of the valve core,
wherein the first set of chambers comprises at least two first conductive chambers that are partitioned with each other, the second set of chambers comprises at least two second conductive chambers that are partitioned with each other, the partition plate comprises a through hole, and a number of the first conductive chambers are in communication with a number of the second conductive chambers through the through hole.

5. The fluid control assembly according to claim 4, wherein the first set of chambers comprises a first chamber and a second chamber, the partition plate comprises a first through hole and a second through hole, and the second set of chambers comprises a third chamber and a fourth chamber, wherein the third chamber is in communication with the first chamber through the first through hole, and the fourth chamber is in communication with the first chamber through the second through hole.

6. The fluid control assembly according to claim 5, wherein,
in the first operating mode, the first port is in communication with the fifth port through the first chamber, the first through hole and the third chamber, and the second port is in communication with the third port through the second chamber,
in the second operating mode, the first port is in communication with the fourth port through the first chamber, the first through hole and the third chamber, and the second port is in communication with the third port through the second chamber,
in the third operating mode, the first port is in communication with the second port through the second chamber, and the third port is in communication with the fifth port through the first chamber, the second through hole and the fourth chamber,
in the fourth operating mode, the first port is in communication with the second port through the second chamber, and the third port is in communication with the fourth port through the first chamber, the second through hole and the fourth chamber.

7. The fluid control assembly according to claim 4, further comprising a first seal, wherein at least part of the first seal is pressed between the side wall portion and the valve core in a radial direction of the accommodation chamber, and the first seal comprises a first sub-pore passage, a second sub-pore passage, a third sub-pore passage, a fourth sub-pore passage and a fifth sub-pore passage, wherein the first sub-pore passage is in communication with the first port, the second sub-pore passage is in communication with the second port, the third sub-pore passage is in communication with the third port, the fourth sub-pore passage is in communication with the fourth port, and the fifth sub-pore passage is in communication with the fifth port,
wherein the first sub-pore passage, the second sub-pore passage and the third sub-pore passage are located at one level of the first seal, and the fourth sub-pore passage and the fifth sub-pore passage are located at another level of the first seal, wherein an orthographic projection of the first sub-pore passage, an orthographic projection of the second sub-pore passage, an orthographic projection of the third sub-pore passage, an orthographic projection of the fourth sub-pore passage and an orthographic projection of the fifth sub-pore passage in an axial direction of the first seal are arranged at intervals in the circumferential direction of the valve core.

8. The fluid control assembly according to claim 7, wherein the first seal comprises a first circumferential wall portion and a second circumferential wall portion, and an orthographic projection of the first circumferential wall portion and an orthogonal projection of the second circumferential wall portion in the axial direction of the first seal are arranged in the circumferential direction of the valve core, wherein the first circumferential wall portion is located between the first sub-pore passage and the third sub-pore passage, and the first circumferential wall portion and the second sub-pore passage are arranged on two opposite sides of the first seal in a radial direction of the first seal,
wherein a central angle corresponding to the first circumferential wall portion is greater than 90 degrees and less than 180 degrees, the second circumferential wall portion is located between the fourth sub-pore passage and the fifth sub-pore passage, and a central angle corresponding to the second circumferential wall portion is greater than 180 degrees.

9. The fluid control assembly according to any one of claims 1 to 3, wherein the first port, the second port, the third port, the fourth port and the fifth port are all located at a same level of the fluid control assembly, and the valve core comprises a fifth chamber, a sixth chamber and a seventh chamber that are partitioned with each other, wherein the sixth chamber is located between the fifth chamber and the seventh chamber in a radial direction of the valve core.

10. The fluid control assembly according to claim 9, wherein,
in the first operating mode, the first port is in communication with the fifth port through the fifth chamber, and the second port is in communication with the third port through the seventh chamber,
in the second operating mode, the first port is in communication with the fourth port through the sixth chamber, and the second port is in communication with the third port through the seventh chamber,
in the third operating mode, the first port is in communication with the second port through the seventh chamber, and the third port is in communication with the fifth port through the sixth chamber,
in the fourth operating mode, the first port is in communication with the second port through the seventh chamber, and the third port is in communication with the fourth port through the fifth chamber.

11. The fluid control assembly according to claim 9, further comprising a second seal, wherein at least part of the second seal is pressed between the side wall portion and the valve core in the radial direction of the accommodation chamber, and the second seal comprises passages, wherein the number of the passages is the same with that of the communication ports, and the passages are in communication with corresponding communication ports, wherein the passages are evenly arranged in the circumferential direction of the valve core.

12. A fluid control apparatus, comprising a fluid management assembly and at least one fluid control assembly according to any one of claims 1 to 11, wherein the fluid control assembly comprises a flow passage and a mounting joint that are in communication with each other, at least part of the fluid management assembly is fitted to the mounting j oint, and a port of the fluid management assembly is in communication with the flow passage.

13. The fluid control apparatus according to claim 12, wherein the fluid management assembly comprises one of a heat exchanger, an electric pump, and a liquid reservoir or a combination thereof.

14. The fluid control apparatus according to claim 12, wherein the fluid control assembly comprises a first flow passage plate and a second flow passage plate, the first flow passage plate and the second flow passage plate are sealed and form at least part of a wall portion of the flow passage, and the mounting joint is located in one of the first flow passage plate and the second flow passage plate.
